# EUROPÄISCHE PATENTSCHRIFT

(11) **EP 2 222 981 B1**
(45) Veröffentlichungstag und Bekanntmachung des Hinweises auf die Patenterteilung: **29.04.2015**
(21) Anmeldenummer: 08850296.8
(22) Anmeldetag: 14.11.2008
(51) Int. Cl.: F16H 7/06, F16H 7/12, F16H 7/08

(54) **ANTRIEBSMITTEL UND KETTENANTRIEB**
DRIVE MEANS AND CHAIN DRIVE
MOYEN D'ENTRAÎNEMENT ET ENTRAÎNEMENT PAR CHAÎNE

(30) Priorität: 16.11.2007 DE 102007055065
(43) Veröffentlichungstag der Anmeldung: 01.09.2010
(73) Patentinhaber: Ketten-Wulf Betriebs-GmbH, 59889 Eslohe-Kückelheim (DE)
(72) Erfinder: GROBBEL, Burkhard, 57392 Schmallenberg (DE)
(74) Vertreter: Brune, Axel
(86) Internationale Anmeldenummer: PCT/EP2008/009653
(87) Internationale Veröffentlichungsnummer: WO 2009/062734

(56) Entgegenhaltungen:
- WO-A-03/036129
- WO-A-2005/012765
- WO-A-2007/003329
- WO-A-2007/092674
- CH-A- 148 573
- DE-A1- 19 926 615
- US-A- 3 580 094

## Beschreibung

Die vorliegende Erfindung betrifft ein Antriebsmittel für den polygonkompensierten Antrieb eines Kettenrades gemäß dem Oberbegriff des Anspruchs 1, sowie einen Kettenantrieb gemäß dem Oberbegriff des Anspruchs 13.

Zur Erläuterung der Begrifflichkeiten "Polygoneffekt" und "Polygonkompensation" wird zunächst wie folgt ausgeführt.

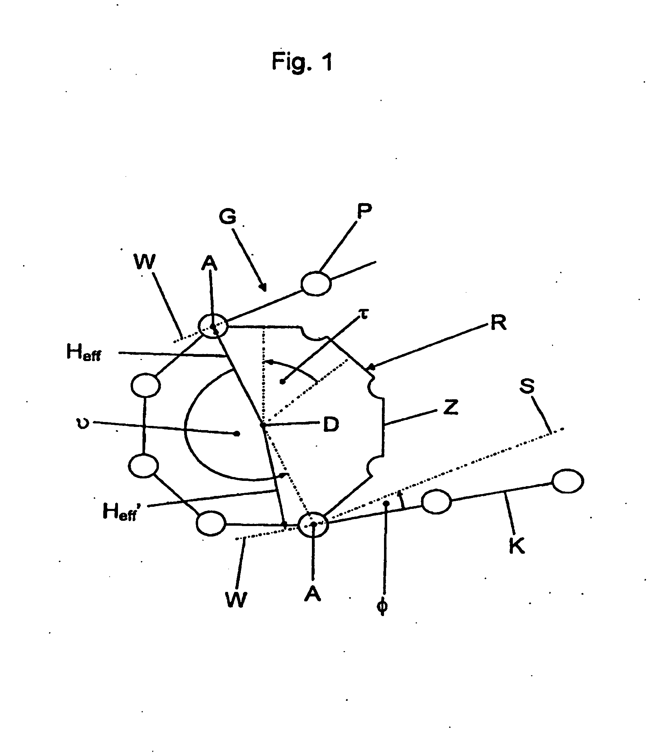

In Fig. 1 sind schematisch eine Gelenkkette G und ein von dieser teilweise umschlungenes Kettenrad R abgebildet. Die Gelenkkette G umfasst gelenkig miteinander verbundene Kettenglieder K, die über einen Drehpunkt P gelenkig miteinander verbunden sind. Das beispielhaft abgebildete Kettenrad K weist 8 Zähne Z auf, zwischen denen Zahnlücken angeordnet sind, in die die Drehpunkte P eingreifen können. Der Teilungswinkel τ zwischen zwei Zähnen bzw. zwei Zahnlücken ist im abgebildeten Beispiel 45°.

Weiterhin ist in Fig. 1 an der unteren Seite des Kettenrades ein Einlaufwinkel φ eingezeichnet, der beispielsweise durch eine die Gelenkkette G ablenkende Führung hervorgerufen werden kann. Der Einlaufwinkel φ wird zwischen der tatsächlichen Ausgangsrichtung der Gelenkkette G und der Senkrechten S auf der Verbindungslinie zwischen Ablösepunkt A der Gelenkkette G von dem Kettenrad R und der Drehachse D des Kettenrades R gemessen. Der Einlaufwinkel φ ist im abgebildeten Beispiel etwa 11°.

In Fig. 1 ist ein momentaner Umschlingungswinkel u eingezeichnet, der dem umlaufenden Winkel zwischen zwei Ablösepunkten A der Gelenkkette G von dem Kettenrad R entspricht und im abgebildeten Fall gleich 180° ist. Wenn ein Kettenglied K von dem Kettenrad R abhebt, wird sich der momentane Umschlingungswinkel υ sprunghaft verkleinern, weil bei unterschiedlichem Einlaufwinkel φ oben und unten beispielweise auf der Oberseite ein Kettenglied K abhebt, gleichzeitig auf der Unterseite das nächste Kettenglied K aber noch nicht aufliegt. Daher wird im Nachfolgenden von einem mittleren Umschlingungswinkel υ ausgegangen, der größer oder gleich dem minimalen Umschlingungswinkel und kleiner oder gleich dem maximalen Umschlingungswinkel ist.

Weiterhin ist an der oberen Seite des Kettenrades R ein effektiver Hebelarm H_{eff} eingezeichnet, der dem senkrechten Abstand zwischen der Wirklinie W der Kraft, insbesondere Zugkraft der Gelenkkette G und der Drehachse D des Kettenrades R entspricht. Wie der momentane Umschlingungswinkel υ schwankt auch der effektive Hebelarm H_{eff} während der Bewegung der Gelenkkette aufgrund des gliedweisen Ablösens der Gelenkkette, insbesondere aufgrund der polygonalen (vieleckförmigen Auflage) der Kette um das Kettenrad. An der unteren Seite des Kettenrades R ist der effektive Hebelarm H_{eff}' etwas kleiner, weil aufgrund der etwas verkippten Wirklinie W der Kraft der Gelenkkette G der effektive Hebelarm H_{eff}' nicht mehr durch den Ablösepunkt A verläuft.

Hierdurch ergeben sich folgende Nachteile bei der technischen Nutzung eines derartigen Kettenrades.

Bei Fahrtreppen beziehungsweise Fahrsteigen werden in der Regel deren Stufen oder Paletten, insbesondere beidseitig, durch Förderketten, die als sogenannte Stufenketten oder Palettenketten ausgebildet sind, angetrieben und auch an diesen befestigt. Üblicherweise haben die Förderketten drei oder vier Teilungen, also auch drei oder vier Gelenke, pro Stufe. Die verwendeten Kettenräder haben etwa 16 bis 25 Zähne. Diese verhältnismäßig hohe Zahl wird gewählt, um den sogenannten Polygoneffekt zu minimieren.

Der Polygoneffekt entsteht durch den schwankenden effektiven Hebelarm H_{eff} (siehe Fig. 1). Kettenräder werden üblicherweise mit konstanter Winkelgeschwindigkeit angetrieben. Durch schwankende effektive Hebelarme schwankt die Geschwindigkeit der Stufenketten, durch ständige Beschleunigung und Verzögerung der bewegten Massen (Ketten, Achsen, Stufen) entstehen Massenkräfte, die als störende Kräfte beziehungsweise Drehmomente in die Stufen-/Palettenketten beziehungsweise in den Antrieb eingeleitet werden und dort teilweise zu verkürzter Lebensdauer führen beziehungsweise eine Größenordnung darstellen, die bei der Auslegung insbesondere der Antriebskomponenten zu berücksichtigen ist. Außerdem stellen die bewegten Teile in einer Fahrtreppe zusammen mit dem umgebenden Stahlbau ein schwingfähiges Feder-Masse-System dar. Insbesondere sind hier Ketten als Federn und Stufen, Achsen (falls vorhanden), Rollen, die transportierten Menschen (auf den Stufen beziehungsweise Paletten) und wiederum die Ketten als Massen zu sehen. Dieses Feder-Masse-System kann je nach Parametern sehr ungünstige Betriebspunkte in Abhängigkeit von Zähnezahl der Kettenräder, Fahrgeschwindigkeit sowie Beladung haben.

Zur Abmilderung des Polygoneffektes werden im Stand der Technik Maßnahmen zur Polygonkompensation vorgeschlagen.

In der Praxis begegnet man diesem Sachverhalt beispielsweise durch Reduzierung der Kettenteilung und Erhöhung der Zähnezahl. Mit sinkender Teilung und steigender Zähnezahl wird der Polygoneffekt geringer, bis schließlich ein Maß erreicht wird, bei dem der Polygoneffekt in der Praxis so gering ist, also die Bewegung der Ketten / Stufen / Paletten so gleichmäßig ist, dass der Polygoneffekt praktisch nicht mehr stört, jedoch immer noch vorhanden ist.

Auch wurden Führungen im Bereich der Kettenräder installiert, die einen tangentialen Einlauf der Kette auf die Kettenräder bewirken. Das primäre Ziel dieser Maßnahme ist, das Einlaufgeräusch der Kette auf die Kettenräder zu reduzieren. Auch der Polygoneffekt wird hierbei reduziert, jedoch nicht kompensiert.

Die konventionelle Bauweise mit relativ geringer Kettenteilung und relativ großer Kettenrad-Zähnezahl hat jedoch entscheidende Nachteile.

Zuerst sind die hohen Kosten für die Stufen- / Palettenkette zu nennen. Je mehr Teilungen diese hat, desto mehr Gelenke bzw. Rollen pro Stufe oder pro Meter, umso höher ihre Kosten. Außerdem existieren dann pro Stufe / Palette eine größere Anzahl von Stellen, die einem Verschleiß unterliegen. Über den Betriebszeitraum der Fahrtreppe ist die möglichst lange Einhaltung des maximal zulässigen Spaltmaßes zwischen den Stufen / Paletten ein sehr wichtiges Kriterium. Bedingt durch hohe Zähnezahlen der Kettenräder haben diese relativ große Durchmesser und benötigen viel Bauraum, insbesondere für die Antriebsstation. Dadurch geht in Gebäuden kostbarer Raum verloren. Bedingt durch große Durchmesser werden hohe Antriebsmomente erforderlich, was entsprechende Kosten für die Antriebe mit sich bringt.

Aus dem Stand der Technik sind einige weitere Maßnahmen zur Kompensation des Polygoneffektes bekannt geworden.

Aus der gattungsbildenden WO 03/036129 A1 sind Antriebe bekannt, welche in der Lage sind, Ketten polygonkompensiert anzutreiben. Das bedeutet, das Antriebs-Kettenrad wird mit veränderlicher Winkelgeschwindigkeit angetrieben, derart, das die von diesem angetriebene Kette mit konstanter bzw. nahezu konstanter Geschwindigkeit läuft. Ein Teil dieser polygonkompensierten Kettenantriebe funktioniert nach dem Prinzip, die Effektivlänge des Lasttrums periodisch zu verändern.

In der DE 10 2006 036 353.1 A1 ist eine Fahrtreppe beschrieben, welche unter Einsatz eines polygonkompensierenden Antriebes es ermöglicht, eine Stufenkette / Fahrtreppenkette mit vergrößerter Kettenteilung und Kettenräder mit reduzierter Zähnezahl zu betreiben. Insbesondere ist die Teilung der Kette hier 50% bzw. 100% der Stufenteilung.

In der Praxis besteht jedoch darüber hinaus die Forderung, Förderer bzw. Fahrtreppen/Fahrsteige reversierbar zu betreiben, d.h. diese müssen vorwärts und auch rückwärts laufen können. Hierzu ist ein reversierbarer Kettenantrieb, insbesondere ein reversierbares Antriebsmittel erforderlich, welches beispielsweise eine Fahrtreppe mit einer konstanten oder annähernd konstanten Geschwindigkeit vorwärts wie rückwärts antreiben kann. Die aus dem Stand der Technik bekannt gewordenen Maßnahmen zur Polygonkompensation können hierfür nicht verwendet werden, da sie stets auf eine Laufrichtung ausgelegt sind.

Zur Kompensation des Polygoneffektes im Zusammenhang mit einem reversierbaren Kettenantrieb sind jedoch bereits Lösungen im Stand der Technik vorgeschlagen worden.

Wie in der DE 10 2006 036 353.1 A1 beschrieben, ist bei der Ausgestaltung der Kettenantriebe bzw. der Förderer auch auf die Abhängigkeit Zähnezahl des Förderketten-Kettenrades zu Umschlingungswinkel υ zu achten. Wirksame Hebelarme H_{eff}, H_{eff}' eines Kettenrades müssen im Obertrum und Untertrum des Kettenantriebs zu allen Zeitpunkten bzw. zu allen Winkelstellungen im Wesentlichen identisch sein.

Hieraus resultiert, dass das Kompensationsverhalten des Antriebsmittels symmetrisch sein muß. Gemeint ist, wenn der wirksame Radius des Kompensationsrades im Obertrum maximal ist muß auch der wirksame Radius im Untertrum maximal sein - und umgekehrt. Hieraus ergibt sich bei ortsfester Anordnung der Kompensationsräder, daß die Zugkraft der Kette im Leertrum sehr stark schwankt. Bei der Erfindung gemäß WO 03/036129 A1 versucht man, die Zugkraft durch Federvorspannung zu vergleichmäßigen oder zumindest diese nicht unter einen bestimmten Mindestwert abfallen zu lassen. Man benötigt also zusätzlich diese Federn. Diese bedeuten zunächst einmal Kosten. Ferner muß sich die Feder an einem ortsfesten Punkt abstützen. Diesen Abstützpunkt zu erzeugen bedeutet ebenfalls Aufwand/Kosten. Des Weiteren steht längst nicht in allen Anwendungen der hierzu benötigte Bauraum zur Verfügung. Im Falle eines Federbruchs ergibt sich zusätzlich noch das Problem, dass die Zugkraft im Leertrum unzulässig stark abfällt - die Robustheit ist also in Frage gestellt.

In jedem Fall ist der Lauf eines auf dieser Basis bestehenden Antriebes begleitet von relativ starken transversalen Bewegungen des jeweiligen Leertrums. Diese können sich unter ungünstigen Betriebsparametern zu Schwingungen aufschaukeln - die Laufruhe des Förderers / der Fahrtreppe könnte also darunter leiden. Bedingt durch sehr viele Flexuren der Schwenkhebel (von Glied zu Glied der Förderkette) können die Lagerungen relativ schnell verschleißen sowie Ausgangspunkt von störenden Geräuschen sein.

Insofern besteht die Aufgabe der vorliegenden Erfindung darin, ein Antriebsmittel vorzuschlagen, welches dazu geeignet ist, ein Kettenrad eines Kettenantriebs derart anzutreiben, dass eine Polygonkompensation sowohl in einer ersten, als auch in einer zweiten, entgegengesetzten Drehrichtung erfolgen kann.

Erfindungsgemäß wird diese Aufgabe durch ein Antriebsmittel mit den kennzeichnenden Merkmalen des Anspruchs 1 gelöst.

Das erfindungsgemäße Antriebsmittel stellt Polygonkompensation in beiden Laufrichtungen sicher und zwar in besonders einfacher und sehr vorteilhafter Weise. Es werden zwei unrunde Kompensationsräder an einer gemeinsamen Schwinge angebracht. Die Schwinge ist an einem ortsfesten Zapfen schwenkbeweglich befestigt. Je nach Drehrichtung des Antriebsmotors bzw. je nach Richtung des Drehmomentes schwenkt die Schwinge in die jeweilige Position. Dies geschieht völlig eigenständig durch die Kraftkomponente, die aus der Zugkraft des Lasttrums resultiert. Der rechtwinklige Abstand vom Eingriff des Kompensationsrades bis zum Mittelpunkt des Zapfens bildet den entsprechenden Hebelarm. Das Produkt aus Kraftkomponente und Hebelarm ergibt ein Drehmoment, welches das Verschwenken der Schwinge bewirkt. Theoretisch wird die Schwinge soweit verschwenkt bis der Hebelarm zu Null geworden ist bzw. bis die Summe der rechtsdrehenden Momente gleich der Summe der linksdrehenden Momente ist. In diesem Fall wird der Leertrum praktisch vom Lasttrum gespannt. Mit Hilfe dieses Zusammenhangs ergeben sich proportionale Verhältnisse Kraft im Leertrum zu Kraft im Lasttrum. D.h. der Leertrum wird last- bzw. drehmomentabhängig gespannt. Dies ist für geringen Verschleiß von Zugmittel und Zugmittelrädern optimal. Zudem bietet diese Anordnung die Möglichkeit Verschleiß des Zugmittels und die damit verbundene Längenänderung in gewissen Grenzen auszugleichen.

Da die Verschwenkung der Schwinge eigenständig erfolgt, ist also keine hydraulische, elektrische, pneumatische oder sonst irgendwie angesteuerte oder angetriebene Verstelleinheit oder ähnliches erforderlich. Auch die in der WO 03/036129 A1 angedeuteten Federn sind hier nicht erforderlich, was den Antrieb einfacher, unempfindlicher und kostengünstiger macht.

Vorteilhafte Ausgestaltungen des vorgeschlagenen Antriebsmittels ergeben sich aus den Merkmalen der Unteransprüche. Besonders vorteilhafte Ausgestaltungen ergeben sich wie folgt.

Die Lagerstelle Zapfen / Schwinge wird vorzugsweise wartungsarm mit eingepressten Gleitlagern aus Metall oder Polymerwerkstoff (z.B. Kunststoff) ausgeführt. Insbesondere die Gleitlager aus Polymerwerkstoff bieten den zusätzlichen Vorteil dass sie Schwingungen reduzieren bzw. isolieren und Geräusche mindern. Denkbar sind aber auch Wälzlager.

Es kann Anwendungen geben, bei denen die Position des Kompensationsrades im Lasttrum absolut definiert sein muß, um beispielsweise der idealen Kompensationswirkung möglichst nahe zu kommen. Hier wird die maximale Auslenkung der Schwinge durch eine Schwenkwinkelbegrenzungseinrichtung, insbesondere mindestens einen mindestens einfachwirkenden Anschlag begrenzt. Vorzugsweise verwendet man einen doppeltwirkenden Anschlag. Die Begrenzung durch den Anschlag bietet auch den Vorteil, dass eventuelle Mikrobewegungen der Schwinge um den Zapfen nicht entstehen können und somit Verschleiß und ggf. Passungskorrosion (herbeigeführt durch Mikrobewegungen) der Lagerstelle Zapfen /Schwinge vermieden werden.

Eine weitere Aufgabe der vorliegenden Erfindung liegt darin, einen polygonkompensierten Kettenantrieb vorzuschlagen, der sowohl in einer ersten Drehrichtung, als auch in einer zweiten Drehrichtung polygonkompensierende Eigenschaften aufweist.

Erfindungsgemäß wird diese Aufgabe durch einen Kettenantrieb mit den kennzeichnenden Merkmalen des Anspruchs 13 gelöst.

Vorteilhafte Ausgestaltungen des vorgeschlagenen Kettenantriebs ergeben sich aus den Merkmalen der Unteransprüche.

Weitere Merkmale und Vorteile der vorliegenden Erfindung werden deutlich anhand der nachfolgenden Beschreibung bevorzugter Ausführungsbeispiels unter Bezugnahme auf die beiliegende Abbildung. Darin zeigt
- Fig. 1: eine schematische Darstellung eines Kettenrades zur Verdeutlichung des Polygoneffektes;
- Fig. 2: eine schematische Darstellung eines erfindungsgemäßen Antriebsmittels in einer ersten Bewegungsrichtung des Zugmittels (angedeutet durch die Pfeile) mit einer ersten Drehposition der Kompensationsräder (β₁₁ = 0°; β₂₁ = 0°) und einer ersten Stellung der Schwinge;
- Fig. 3: eine schematische Darstellung eines erfindungsgemäßen Antriebsmittels in einer ersten Bewegungsrichtung des Zugmittels mit einer zweiten Drehposition der Kompensationsräder (β₁₂ = 45°; β₂₂ = 45°) und einer ersten Stellung der Schwinge;
- Fig. 4: eine schematische Darstellung eines erfindungsgemäßen Antriebsmittels in einer zweiten, entgegengesetzten Bewegungsrichtung des Zugmittels mit einer ersten Drehposition der Kompensationsräder (β₁₁ = 0°; β₂₁ = 0°) unter Berücksichtigung des Verdrehwinkels λ der Kompensationsräder und einer zweiten Stellung (Verdrehung um den Winkel δ gegenüber Stellung gemäß Fig. 2 und 3) der Schwinge;
- Fig. 5: eine schematische Darstellung eines erfindungsgemäßen Antriebsmittels in einer zweiten, entgegengesetzten Bewegungsrichtung des Zugmittels mit einer zweiten Drehposition der Kompensationsräder (β₁₂ = 45°; β₂₂ = 45°) und einer zweiten Stellung (Verdrehung um den Winkel δ gegenüber Stellung gemäß Fig. 2 und 3) der Schwinge;

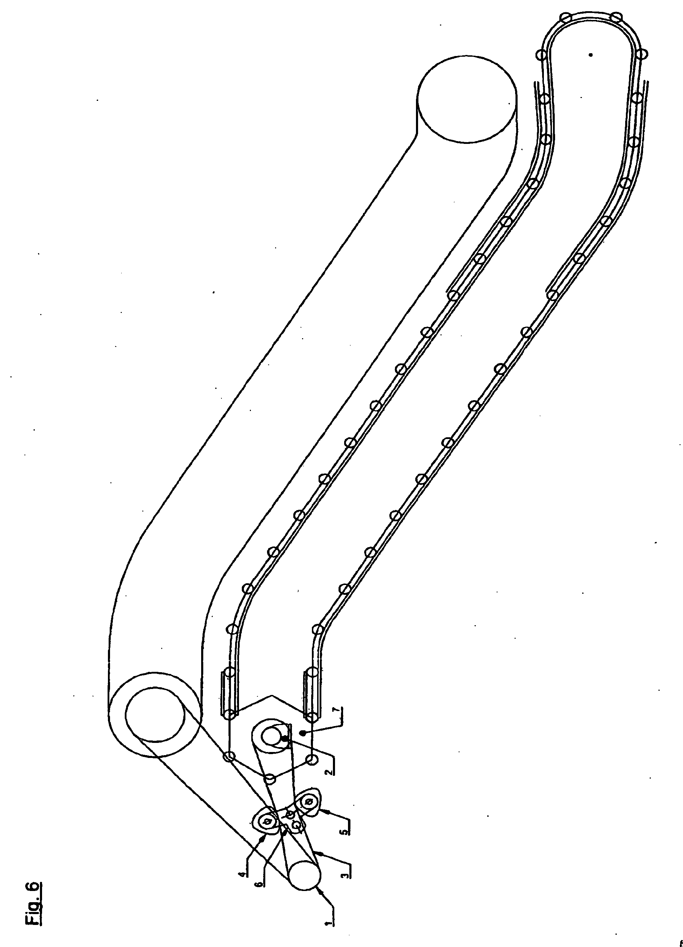

- Fig. 6: eine schematische Darstellung eines erfindungsgemäßen Kettenantriebs, insbesondere eines Förderkettenantriebs.

In den Abbildungen werden nachfolgende Bezugszeichen verwendet:
- G: Gelenkkette
- R: Kettenrad
- K: Kettenglied
- P: Drehpunkt
- S: Senkrechte
- A: Ablösepunkt
- D: Drehachse
- H_{eff}: effektiver Hebelarm
- H_{eff}': effektiver Hebelarm

- 1: erstes Zugmittelrad
- 2: zweites Zugmittelrad
- 3: Zugmittel
- 4: erstes Kompensationsrad
- 5: zweites Kompensationsrad
- 6: Schwinge
- 7: Kettenrad
- 8: Zapfen

- 31: Obertrum
- 32: Untertrum

- 41: erster Laufflächenabschnitt
- 42: zweiter Laufflächenabschnitt
- 43: dritter Laufflächenabschnitt
- 44: vierter Laufflächenabschnitt
- 45: Lagerung (Drehachse)

- 61: erster Hebelarm
- 62: zweiter Hebelarm
- 63: Schwingenabschnitt
- 64: Bohrung
- 65: Langloch
- 66: Anschlag
- 67: Bohrung
- 68: geometrische Achse "Zentrum Motorritzel" (erstes Zugmittelrad 1)- "Zentrum Rollenkettenrad auf der Welle des Förderkettenrades" (zweites Zugmittelrad 2)
- 69: geometrische Mittelachse

- φ: Einlaufwinkel
- υ: Umschlingungswinkel
- τ: Teilungswinkel

- r₁ₙ: wirksamer Radius (Abstand) des ersten Kompensationsrades zwischen Drehachse und Lauffläche
- r₂ₙ: wirksamer Radius (Abstand) des zweiten Kompensationsrades zwischen Drehachse und Lauffläche

- αₙ: Winkelbeziehungen der Schwinge
- β₁ₙ: Rotationswinkel des ersten Kompensationsrades
- β₂ₙ: Rotationswinkel des zweiten Kompensationsrades
- λ: Verdrehwinkel der Kompensationsräder zur Anpassung an die Drehrichtung
- δ: Schwenkwinkel der Schwinge

Ein erfindungsgemäßes Antriebsmittel umfasst im Wesentlichen ein erstes Zugmittelrad 1, ein zweites Zugmittelrad 2, ein Zugmittel 3, ein erstes Kompensationsrad 4, ein zweites Kompensationsrad 5 und eine Schwinge 6.

Ein erfindungsgemäßer Kettenantrieb umfasst mindestens ein erfindungsgemäßes Antriebsmittel und mindestens ein Kettenrad 7, welches von dem Antriebsmittel angetrieben wird. Insbesondere umfasst ein erfindungsgemäßer Kettenantrieb eine Förderkette, vorzugsweise eine Stufenkette oder Palettenkette, auf der eine Anzahl von Fahrtreppenstufen oder Paletten angebracht sind, sowie ein weiteres (nicht dargestelltes) in der Regel nicht angetriebenes Kettenrad, wobei die Förderkette auf dem Kettenrad 7 und dem weiteren Kettenrad läuft.

Das Zugmittel 3, beispielsweise eine Kette, vorzugsweise eine Rollenkette, ist nach Art einer Endloskette um das erste Zugmittelrad 1 und das zweite Zugmittelrad 2 gelegt. Es ergibt sich ein erster, nicht auf den Zugmittelrädern 1, 2 aufliegender Abschnitt des Zugmittels 3, der gemäß seiner üblichen Lage als Obertrum 31 bezeichnet wird und ein zweiter, nicht auf den Zugmittelrädern 1, 2 aufliegender Abschnitt des Zugmittels 3, der ebenfalls gemäß seiner üblichen Lage als Untertrum 32 bezeichnet wird. Vorzugsweise wird das erste Zugmittelrad 1 von einem Motor (nicht dargestellt) in Drehung versetzt. Gemäß der sich ergebenden Übersetzung wird das zweite Zugmittelrad 2 durch das umlaufende Zugmittel 3 in Drehung versetzt und treibt wiederum das Kettenrad 7 an. Das Kettenrad 7 kann beispielsweise Teil eines Kettenantriebs sein, insbesondere eine Förderkette antreiben, auf der wiederum einzelne Treppenstufen oder Paletten angebracht sind. Als Fahrtreppen kommen insbesondere Fahrtreppen mit Treppenstufen in Frage, wie sie beispielsweise in Kaufhäusern Verwendung finden, als auch Fahrsteige mit Paletten, wie sie beispielsweise auf Flughäfen Verwendung finden.

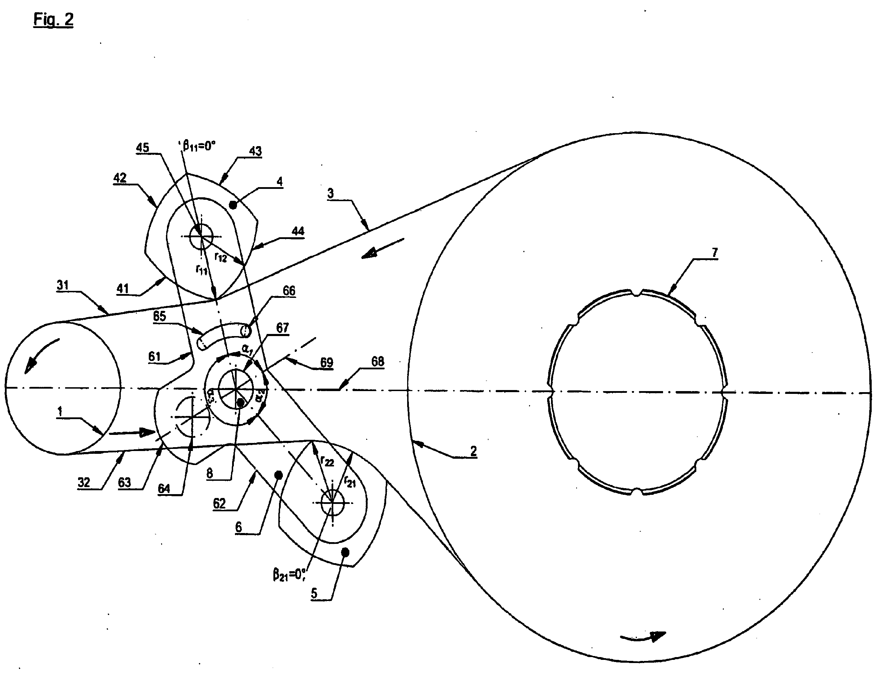

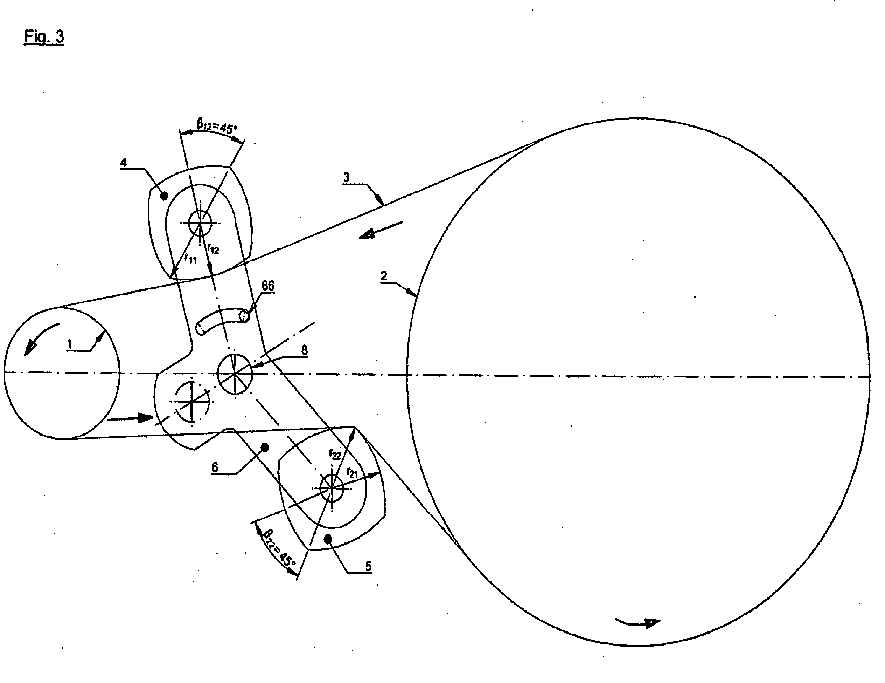

Die Kompensationsräder 4, 5 weisen eine von der Kreisform abweichende, unrunde Gestalt auf und sind mit einer Lagerung 45 zur drehbaren Verbindung mit der Schwinge 6 ausgestattet. Die Lagerung 45 bildet die Drehachse der Kompensationsräder 4, 5. Es kann vorzugsweise vorgesehen sein, dass die Kompensationsräder eine Lauffläche mit vier Laufflächenabschnitte 41, 42, 43, 44 aufweisen, wobei die Laufflächenabschnitte 41, 42, 43, 44 vorzugsweise konvex ausgestaltet sind. Ein Laufflächenabschnitt ist dementsprechend als solches im Wesentlichen kreisförmig ausgestaltet, weist jedoch keinen gemeinsamen Kreismittelpunkt mit den übrigen Laufflächenabschnitten auf. Es ist anzumerken, dass die unrunde Ausgestaltung der Kompensationsräder 4, 5 in den Zeichnungen - zu illustrativen Zwecken - stark übertrieben dargestellt ist. Tatsächlich fällt die unrunde Ausgestaltung der Kompensationsräder weit weniger stark aus, als es die Abbildungen suggerieren. Funktional ist ein Kompensationsrad 4, 5 dazu eingerichtet, eine Lauffläche für das Zugmittel 3 bereitzustellen. Der wirksame Radius r zwischen der Drehachse 45 des jeweiligen Kompensationsrades 4, 5 und dem anliegenden Zugmittel 3 ist eine Funktion der Winkelstellung β des Kompensationsrades 4, 5. Zu illustrativen Zwecken sind zwei wirksame Radien r₁₁ und r₁₂ des ersten Kompensationsrades 4 und zwei wirksame Radien r₂₁ und r₂₂ des zweiten Kompensationsrades 5 in den Figuren 2 bis 5 eingezeichnet. Ferner sind beispielhafte Winkelstellungen β₁₁ und β₁₂ des ersten Kompensationsrades 4 und beispielhafte Winkelstellungen β₂₁ und β₂₂ des zweiten Kompensationsrades 5 dargestellt. Es ergibt sich für Fig. 2 und Fig. 3 folgender beispielhafter Zusammenhang:

| Erstes | Erstes | Zweites | Zweites |
|---|---|---|---|
| Kompensationsrad | Kompensationsrad | Kompensationsrad | Kompensationsrad |
| β₁₁ = 0° | r₁₁ mit r₁₁ > r₁₂ | β₂₁ = 0° | r₂₁ mit r₂₁ < r₂₂ |
| β₁₂ = 45° | r₁₂ mit r₁₂ < r₁₃ | β₂₂ = 45° | r₂₂ mit r₂₂ > r₂₃ |
| ... | ... | ... | ... |
| β₁ₙ = 360° | r₁ₙ mit r₁ₙ > r₁ₙ₊₁ | β₂ₙ = 360° | r₂ₙ mit r₂ₙ < r₂ₙ₊₁ |

Aus der Tabelle und auch aus den Abbildungen wird ersichtlich, dass es im Wesentlichen darauf ankommt, ein Kompensationsrad 4, 5 vorzusehen, welches in Abhängigkeit von der Drehwinkelstellung β eine Lauffläche mit unterschiedlichen Radien (Abständen) r zum Drehmittelpunkt aufweist. Insofern ist die hier skizzierte Form lediglich beispielhaft. Auch andere Kompensationsradformen sind denkbar, beispielsweise auch Evolventenformen.

Es ist anzumerken, dass die Kompensationsräder, insbesondere deren Laufflächen, hier sehr schematisch beschrieben werden. Vorzugsweise handelt es sich bei den Kompensationsrädern um Räder, die einen Formschluss mit dem Zugmittel eingehen sollen. Vorzugsweise kommen hier verzahnte Räder in Frage, so dass die Lauffläche im Wesentlichen mit dem Teilkreisdurchmesser des verzahnten Rades zusammenfällt. Entsprechend weist ein als verzahntes Rad ausgestaltetes Kompensationsrad 4, 5 unterschiedliche Teilkreisdurchmesser auf.

Die Schwinge 6 weist im Wesentlichen eine Y-förmige Gestalt auf. Insofern weist die Schwinge einen ersten Hebelarm 61, einen zweiten Hebelarm 62 und einen weiteren Schwingenabschnitt 63 auf. Der erste Hebelarm 61 und der zweite Hebelarm 62 sind in einen stumpfen Winkel α₁ zueinander ausgerichtet. Zwischen dem ersten Hebelarm 61 und dem Schwingenabschnitt 63 bzw. dem zweiten Hebelarm 62 und dem Schwingenabschnitt 63 ist jeweils ein überstumpfer Winkel α₂ bzw. α₃ vorgesehen. Zwischen den

Hebelarmen 61 und 62 und vorzugsweise im Schnittpunkt der Längsachsen der Hebelarme 61, 62 ist eine Bohrung 67 zur drehbaren Aufnahme der Schwinge 6 auf einem ortsfesten Zapfen 8 vorgesehen. Der Zapfen 8 und die Bohrung 67 bilden entsprechend eine Lagerung, die es ermöglicht, die Schwinge um eine Schwenkachse zu schwenken, die in Längsrichtung des Zapfens 8 verläuft. Des Weiteren wird der Zapfen 8 vorzugsweise auf einer geometrischen Achse "Zentrum Motorritzel" (erstes Zugmittelrad 1)- "Zentrum Rollenkettenrad auf der Welle des Förderkettenrades" (zweites Zugmittelrad 2) positioniert. Vorgenannte geometrische Achse ist mit dem Bezugszeichen 68 in den Figuren gekennzeichnet. Ferner ist der erste Hebelarm 61 und der zweite Hebelarm 62 an seinem freien Ende mit jeweils einem Lagermittel, beispielsweise einem Zapfen, zur drehbaren Aufnahme je eines Kompensationsrads 4, 5 ausgestattet. Die Bohrung 45 der Kompensationsräder 4, 5 ist entsprechend Teil des Lagermittels. Der Schwingenabschnitt 63 ist mit einer Bohrung 64 ausgestattet. Durch die weitere Bohrung 64 ist die Schwinge 6 grundsätzlich dazu eingerichtet, in einer alternativen Position auf den Zapfen 8 aufgesteckt zu werden. Insofern bildet die Bohrung 64 und der Zapfen 8 eine alternative Lagerung. Grundsätzlich sind weitere Bohrungen in der Schwinge 6 und insofern auch weitere alternative Positionen der Schwinge 6 denkbar. Durch diese Maßnahme werden verschiedene Lagerpunkte geschaffen, welche insbesondere zu unterschiedlichen geometrischen Beziehungen zwischen der Schwenkachse, den Aufnahmepunkten (Drehachse 45) der Kompensationsräder 4, 5 und den Zugmittelrädern 1, 2 führen. Insbesondere durch die Position der Lagerung in Bezug auf die Drehachsen 45 der Kompensationsräder 4, 5 kann der gewünschte Verdrehwinkel λ der Kompensationsräder 4, 5 eingestellt werden. Es kann sichergestellt werden, dass die Kompensationsräder 4, 5 beim Schwenken der Schwinge 6 um den Schwenkwinkel δ um den Verdrehwinkel λ verdreht werden. Die Bestimmung der Position der Lagerung der Schwinge erfolgt im Wesentlichen iterativ. Als Vorgabe ist der erwünschte Verdrehwinkel λ der Kompensationsräder 4, 5 bekannt. Dieser erwünschte Verdrehwinkel λ lässt sich auf verschiedene Arten einstellen. Bei vorgegebener Ausgestaltung der Schwinge und einem ebenfalls vorgegebenen Schwenkwinkel δ der Schwinge 6, lässt sich der Verdrehwinkel λ beispielsweise durch eine Positionsänderung der Lagerung der Schwinge 6 einstellen. Selbstverständlich könnten auch weitere Parameteränderungen zur Einstellung des gewünschten Verdrehwinkels λ geändert werden, wie beispielsweise die Form und/oder Abmessungen der Schwinge 6 und/oder der Schwenkwinkel δ, und/oder die Winkel α₁ , α₂ bzw. α₃, und/oder der Abstand zwischen dem Zapfen 8 und dem jeweiligen Zentrum der Kompensationsräder 4, 5 etc.. Es hat sich jedoch herausgestellt, dass die Positionierung der Lagerung der Schwinge 6 die einfachste Möglichkeit darstellt, um eine Einstellung des gewünschten Verdrehwinkels λ vorzunehmen. Die Schwinge mit einer Anzahl von Bohrungen 64, 67 auszustatten, bietet eine besonders einfache Möglichkeit, die Position der Lagerung durch Umstecken zwischen der Bohrung 67 und Bohrung 64 zu verändern. Eine Feinabstimmung kann dann durch eine Positionierung des Zapfens 8 vorgenommen werden.

Es ist anzumerken, dass die Bohrungen 64, 67 bzw. die Mittelpunkte der Bohrungen auf einer Mittelachse 69 angeordnet sind. Die Mittelachse 69 stellt insofern eine Linie dar, auf der bevorzugt weitere Bohrungen zur Aufnahme der Schwinge 6 auf dem Zapfen 8 angeordnet sein können. Ferner ist anzumerken, dass beispielsweise auch eine V-förmige, T-förmige oder auch gerade Ausgestaltung der Schwinge möglich ist. Es kommt im Wesentlichen darauf an, dass mit dem Schwenken der Schwinge 6 der gewünschte Verdrehwinkel λ der Kompensationsräder erreicht werden kann.

Die Schwinge 6 ist ferner mit einer Schwenkwinkelbegrenzungseinrichtung ausgestattet. Die Schwenkwinkelbegrenzungseinrichtung umfasst im Wesentlichen und vorzugsweise ein Langloch 65 in der Schwinge 6 und einen ortsfesten Anschlag 66.

Die Funktion des erfindungsgemäßen Antriebsmittels bzw. des erfindungsgemäßen Kettenantriebs gestaltet sich wie folgt.

In einer ersten Drehrichtung der Zugmittelräder 1, 2 und der hieraus resultierenden Bewegungsrichtung des Zugmittels 3, drehen sich die Zugmittelräder und die Kompensationsräder bzw. bewegt sich das Zugmittel wie mit den Pfeilen in den Fig. 2 und 3 angedeutet. Für diesen Fall der Bewegungsrichtung ist der Obertrum 31 des Zugmittels 3 der ziehende Trum, sprich der Lasttrum, und der Untertrum 32 des Zugmittels 3 der gezogene Trum, sprich der Leertrum.

Die Kompensationsräder 4, 5 wirken unmittelbar auf den jeweils anliegenden Abschnitt des Zugmittels 3 ein. Im Falle des ersten Kompensationsrades 4 ist dies der Obertrum 31 und im Falle des zweiten Kompensationsrades 5 ist dies der Untertrum 32. Die Einwirkung erfolgt in Form einer Verschiebung des jeweiligen Zugmittelabschnitts in Abhängigkeit von der Drehwinkelstellung β des Kompensationsrades 4, 5.

Zu illustrativen Zwecken sind jeweils zwei verschiedene Drehwinkelstellungen β der Kompensationsräder 4, 5 in den Fig. 2 und 3 dargestellt. In Zusammenschau der Fig. 2 und 3 ist erkennbar, dass das erste Kompensationsrad 4 bei einer Drehung von β = 0° auf 45° den auf dem Laufflächenabschnitt anliegenden Abschnitt des Obertrums 31 um die Differenz zwischen den Radien r₁₁ und r₁₂ verschoben hat (Fig. 2 zu Fig. 3). Der Abstand zwischen der Drehachse 45 des zweiten Kompensationsrades 5 und dem auf der Lauffläche aufliegenden Untertrum 32 wurde ebenfalls verändert, von r₂₁ auf r₂₂ (Fig. 2 zu Fig. 3).

Die abwechselnde Verlagerung von Obertrum 31 und Untertrum 32 in der angedachten Weise bewirkt, dass ein Spannen des Obertrums 31 mit einem Entspannen des Untertrums 32 und ein Entspannen des Obertrums 32 mit einem Spannen des Untertrums 31 abwechselnd einhergeht. Insofern bilden die Schwinge 6 und die Kompensationsräder 4, 5 ein Spannmittel für das Zugmittel 3. Durch die Form der Laufflächen der Kompensationsräder 4, 5 ergeben sich selbstverständlich Zwischenabstände r(β), die von der Geometrie des jeweiligen Kompensationsrades 4, 5 abhängig sind. Im Grundsatz erfolgt aber ein abwechselndes Spannen und Entspannen von Obertrum 31 und Untertrum 32, sobald das Antriebsmittel in Betrieb genommen wird.

Durch den Einsatz der Kompensationsräder 4, 5 ergibt sich folgender Effekt. Soweit davon ausgegangen wird, dass das erste Zugmittelrad 1 mit einer konstanten Winkelgeschwindigkeit (Rotationsgeschwindigkeit) angetrieben wird, dreht sich das zweite Zugmittelrad 2 mit einer nicht konstanten Winkelgeschwindigkeit. Dieser Effekt ist darauf zurückzuführen, dass der Obertrum 31 durch das Spannen verlängert wird und der Untertrum 32 durch das Entspannen verkürzt wird bzw. der Obertrum 31 durch das Entspannen verkürzt wird und der Untertrum 32 durch das Spannen verlängert wird. Die Winkelgeschwindigkeit des zweiten Zugmittelrades 2, aufgetragen über der Zeit, entspricht im weitesten Sinne einer Kosinusfunktion mit einem stetigen Wechsel zwischen einer maximalen und einer minimalen Winkelgeschwindigkeit. Mit einem derart angetriebenen zweiten Zugmittelrad 2 lässt sich wiederum das Kettenrad 7 eines Kettenantriebs, insbesondere einer Fahrtreppe, derart antreiben, dass sich die Fahrtreppe/Fahrsteig, insbesondere deren Stufen bzw. Paletten mit einer konstanten oder annähernd konstanten Geschwindigkeit bewegt. Wenn der kürzere effektive Hebelarm H_{eff}' die Geschwindigkeit der angetriebenen Rollenkette bestimmt, wird die Rotationsgeschwindigkeit des zweiten Zugmittelrades 2 erhöht und wenn der längere effektive Hebelarm H_{eff} die Geschwindigkeit der angetriebenen Rollenkette bestimmt, wird die Rotationsgeschwindigkeit des zweiten Zugmittelrades 2 gemindert. Durch diese Maßnahme wird dem Eingangs beschriebenen Polygoneffekt entgegengewirkt und die Rollenkette bewegt sich im Ergebnis mit einer annähernd konstanten Geschwindigkeit.

Zur Kompensation des Polygoneffektes ist grundsätzlich eine Abstimmung des Antriebsmittels auf das Kettenrad bzw. den Kettenantrieb erforderlich, dergestalt, dass die Änderung der Rotationsgeschwindigkeit des zweiten Zugmittelrades 2 auf die Hebelarmänderung des Kettenrades 7 abgestimmt wird. Dem Fachmann sind die hierfür erforderlichen Maßnahmen bekannt. Die Abstimmung erfolgt jedoch grundsätzlich für eine Rotationsrichtung des Kettenrades 7 bzw. der vorgeschalteten Komponenten des Antriebsmittels. Wird die Rotationsrichtung umgekehrt, ist eine Polygonkompensation in den aus dem Stand der Technik bekannt gewordenen Kettenantrieben nicht länger gegeben. Es kann vielmehr der Fall auftreten, dass der Polygoneffekt noch verstärkt wird und die Rollenkette sich mit beachtlichen Geschwindigkeitsschwankungen bewegt.

Bei dem erfindungsgemäßen Kettenantrieb, insbesondere dem Antriebsmittel, ist, wenn der wirksame Radius r₁ₙ des Kompensationsrades 4 im Obertrum 31 maximal ist, der wirksame Radius r₂ₙ im Untertrum minimal - und umgekehrt. Trotz dieses Sachverhaltes liegt symmetrisches Kompensationsverhalten vor. Also bei Drehrichtungsumkehr des Antriebsmotors bzw. bei Wechsel des Drehmomentes wechseln Last- und Leertrum und die Kompensationswirkung arbeitet trotzdem wieder richtig.

Erreicht wird dies durch Verdrehung der Kompensationsräder 4, 5 um einen bestimmten Winkel, insbesondere durch Verdrehung um einen Verdrehwinkel λ. Bei Drehrichtungsumkehr wird die Schwinge 6 um einen Schwenkwinkel 8 verschwenkt. Bedingt durch Formschluß zwischen den Kompensationsrädern 4, 5 und dem Zugmittel 3 (vorzugsweise Rollenkette) verdrehen sich diese definiert um einen bestimmten Winkel λ. Dieses Verdrehen der Kompensationsräder 4, 5 ist äußerst vorteilhaft, denn hierdurch verändern sich die wirksamen Radien r₁ₙ und r₂ₙ und es stellt sich eine Kompensationswirkung ein, wie sie für die neue Drehrichtung erforderlich ist. Zudem ergibt sich der Vorteil dass die Spannung des Leertrums sich nahezu ideal vergleichmäßigt. Durch die Befestigung der Kompensationsräder 4, 5 an einer gemeinsamen Schwinge 6, die wiederum an einem Zapfen 8 gelagert ist, ergibt sich ein äußerst einfaches, selbsttätig sich ausrichtendes, robustes und kostengünstiges Antriebsmittel bzw. Kettenantrieb, der obendrein noch den Vorteil bietet dass das Zugmittel 3, insbesondere die Kette, zu allen Zeitpunkten bzw. zu allen Winkelstellungen der Zugmittelräder 1, 2 gleichmäßig bzw. nahezu gleichmäßig gespannt ist. Zur Befestigung wird an dem Antriebsmittel lediglich ein Punkt benötigt, an dem der Zapfen 8 für die Lagerung der Schwinge 6 befestigt wird. Außerdem benötigt dieses Antriebsmittel nur wenig Bauraum - es baut äußerst kompakt.

Der Verdrehwinkel λ der Kompensationsräder 4, 5 und die Anbringung der Schwinge 6 können insbesondere mittels folgender Berechnungen bestimmt werden.

Der erforderliche Verdrehwinkel λ der Kompensationsräder 4, 5 wird wie folgt berechnet: Man ermittelt den halben Teilungswinkel des Förderkettenrades 7 und multipliziert diesen mit der Zähnezahl des Zugmittelrades 2 auf der Welle des Förderkettenrades 7 geteilt durch die Zähnezahl der Kompensationsräder 4, 5. Dieser Wert ist der Winkel λ um den - bei einem Wechsel der Drehrichtung bzw. des Drehmomentes - die Kompensationsräder 4, 5 verdreht werden müssen. Jedes der beiden Kompensationsräder 4, 5 wird - für sich betrachtet - praktisch um den Wert λ verdreht.

In dem vorliegenden Beispiel beträgt der Verdrehwinkel λ etwa 45°, was wiederum dem Winkel zwischen β₁₁ und β₁₂ bzw. β₂₁ und β₂₂ entspricht, der sich wiederum aus dem Winkel zwischen benachbarten r₁₁ und r₁₂ bzw. r₂₁ und r₂₂, also dem Winkel zwischen dem maximalen Radius und dem minimalen Radius des unrunden Kompensationsrades ergibt.

Zur Erreichung genau dieser Verdrehwinkel λ wird innerhalb der Schwinge 6 die Position des Zapfens 8, um den die Schwinge 6 verschwenkt wird, auf der angedeuteten Mittelachse 69 der Schwinge 6 so positioniert dass, bei Wechsel der Drehrichtung, sich für die Kompensationsräder 4, 5 ein entsprechender Verdrehwinkel λ ergibt. An welcher Stelle auf der Achse der Punkt optimalerweise liegt wird vom Fachmann zeichnerisch oder rechnerisch ermittelt.

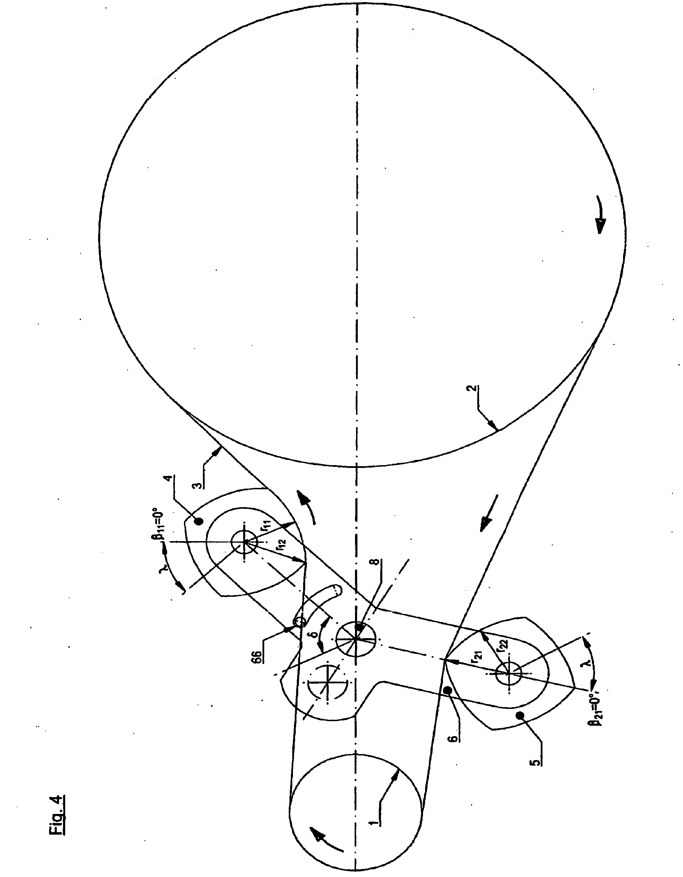

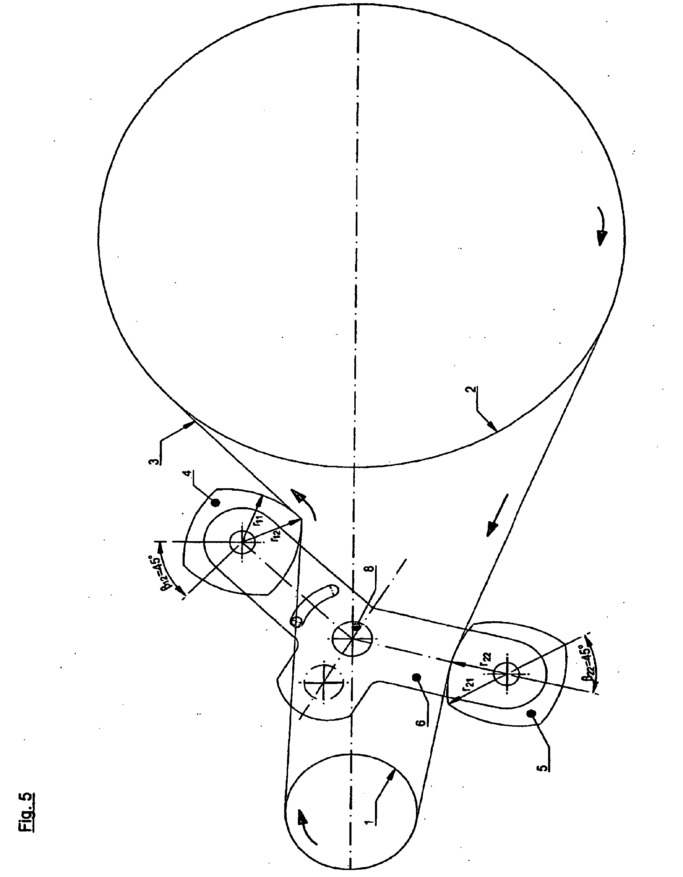

Zu illustrativen Zwecken ist in den Fig. 4 und 5 ein Antriebsmittel für einen Kettenantrieb mit einer gegenüber den Fig. 2 und 3 umgekehrten Drehrichtung skizziert. Die Schwinge 6 ist gegenüber dem Zustand gemäß Fig. 2 und 3 um einen Schwenkwinkel δ geschwenkt worden. Hieraus ergibt sich der zur Aufrechterhaltung der Polygonkompensation bei umgekehrter Drehrichtung notwendige Verdrehwinkel λ der Kompensationsräder 4, 5. Das erste Kompensationsrad 4 wirkt nunmehr auf den Leertrum des Antriebsmittels ein, der nunmehr durch den Obertrum 31 gebildet wird. Das zweite Kompensationsrad 5 wirkt nunmehr auf den Lasttrum ein, der nunmehr durch den Untertrum 32 gebildet wird. Ansonsten kann auf die Ausführungen zu den Fig. 2 und 3 verwiesen werden. Das gegenläufige Spannen und Entspannen von Obertrum 31 und Untertrum 32 erfolgt prinzipiell weiterhin in der oben skizzierten Weise.

Um die Funktion der Schwinge 6 beim Wechsel der Drehrichtung zu gewährleisten, also die Spannung in der Antriebskette zu erhalten, können bei Bedarf an sich nach dem Stand der Technik bekannte Spannelemente ergänzt werden.

Die vorliegende Erfindung lässt sich insbesondere als Kettenantrieb, umfassend ein angetriebenes Kettenrad, ein Antriebsmittel für den polygonkompensierten Antrieb des Kettenrades, wobei die Antriebsmittel zwei Zugmittelräder 1, 2, ein über diese laufendes Zugmittel 3 und bewegliche Spannmittel umfassen, beschreiben, welches sich insbesondere dadurch auszeichnet, dass die Spannmittel je nach Drehrichtung der Zugmittel entweder durch Einwirkung auf den Lasttrum der Zugmittel die effektive Länge des Lasttrums ändern oder durch Einwirkung auf den Leertrum der Zugmittel die effektive Länge des Leertrums ändern können.

Ferner zeichnet sich die vorliegende Erfindung insbesondere dadurch aus, dass die Spannmittel eine schwenkbare Schwinge 6 umfassen, ferner insbesondere dadurch dass die Spannmittel zwei unrunde Kompensationsräder 4, 5 umfassen, die an der Schwinge 6 angebracht sind, ferner insbesondere dadurch, dass ein erstes der Kompensationsräder 4 mit dem Lasttrum der Zugmittel in Eingriff gelangen kann, wohingegen das zweite der Kompensationsräder 5 mit dem Leertrum der Zugmittel in Eingriff gelangen kann.

In einer bevorzugten Ausgestaltung des Antriebsmittel kann vorgesehen sein, dass die Schwinge mit einer Schwenkwinkelbegrenzungseinrichtung ausgestattet ist.

In einer weiteren bevorzugten Ausgestaltung des Antriebsmittel kann vorgesehen sein, dass die Schwenkwinkelbegrenzungseinrichtung ein Langloch 65 in der Schwinge 6 und einen ortsfesten Anschlag 66 umfasst.

In einer weiteren bevorzugten Ausgestaltung des Antriebsmittel kann vorgesehen sein, dass das Antriebsmittel dazu eingerichtet ist, dass ein Verschwenken der Schwinge 6 durch eine Drehrichtungsumkehr und/oder Drehmomentwechsel der Zugmittelräder 1, 2 ausgelöst wird.

In einer weiteren bevorzugten Ausgestaltung des Antriebsmittel kann vorgesehen sein, dass es sich bei dem Zugmittel um ein formschlüssiges Zugmittel, insbesondere um eine Kette, vorzugsweise eine Rollenkette, handelt.

In einer weiteren bevorzugten Ausgestaltung des Antriebsmittel kann vorgesehen sein, dass das Lager zwischen dem Zapfen 8 und der Schwinge 6 aus einem eingepressten Gleitlager aus Metall oder Polymerwerkstoff gebildet wird.

## Patentansprüche

1. Antriebsmittel für den polygonkompensierten Antrieb eines Kettenrades, umfassend
- zwei Zugmittelräder (1, 2),
- ein über diese laufendes Zugmittel (3) mit einem Obertrum (31) und einem Untertrum (32) und
- ein auf das Zugmittel (3) einwirkendes Spannmittel, **wobei das Spannmittel umfasst,**
- ein erstes unrundes Kompensationsrad (4), welches mit dem Obertrum (31) in Kontakt treten kann,
- ein zweites unrundes Kompensationsrad (5), welches mit dem Untertrum (32) in Kontakt treten kann,
**dadurch gekennzeichnet, dass** das Spannmittel ferner umfasst:
- eine einzige Schwinge (6), die zur drehbaren Aufnahme sowohl des ersten Kompensationsrades (4) und des zweiten Kompensationsrades (5) eingerichtet ist, wobei
- die Schwinge (6) schwenkbar auf einem ortsfesten Lager gelagert ist.

2. Antriebsmittel nach Anspruch 1, **dadurch gekennzeichnet, dass** die Kompensationsräder (4, 5) eine Drehachse (45) und eine Lauffläche (41, 42, 43, 44) für das Zugmittel (3) aufweisen, wobei mindestens ein erster Radius (r₁₁, r₂₁) zwischen der Drehachse und der Lauffläche und ein zweiter Radius (r₁₂, r₂₂) zwischen der Drehachse (45) und der Lauffläche (41, 42, 43, 44) vorgesehen ist, wobei der erste Radius ungleich dem zweiten Radius ist.

3. Antriebsmittel nach einem der vorhergehenden Ansprüche, **dadurch gekennzeichnet, dass** die Kompensationsräder (4, 5) mindestens einen, vorzugsweise vier Laufflächenabschnitte (41, 42, 43, 44) aufweisen, wobei mindestens ein erster Radius (r₁₁, r₂₁) zwischen der Drehachse und dem Laufflächenabschnitt und ein zweiter Radius (r₁₂, r₂₂) zwischen der Drehachse (45) und dem Laufflächenabschnitt (41, 42, 43, 44) vorgesehen ist, wobei der erste Radius ungleich dem zweiten Radius ist.

4. Antriebsmittel nach einem der vorhergehenden Ansprüche, **dadurch gekennzeichnet, dass** die Laufflächenabschnitte (41, 42, 43, 44) konvex ausgebildet sind.

5. Antriebsmittel nach einem der vorhergehenden Ansprüche, **dadurch gekennzeichnet, dass** es sich bei den Kompensationsrädern um verzahnte Räder handelt, wobei die Lauffläche oder der Laufflächenabschnitt für das Zugmittel dem Teilkreis des verzahnten Rades entspricht.

6. Antriebsmittel nach einem der vorhergehenden Ansprüche, **dadurch gekennzeichnet, dass** das erste Kompensationsrad (4) und das zweite Kompensationsrad (5) identisch ausgestaltet sind.

7. Antriebsmittel nach einem der vorhergehenden Ansprüche, **dadurch gekennzeichnet, dass** die Schwinge (6) einen ersten Hebelarm (61) und einen zweiten Hebelarm (62) aufweist, wobei das erste Kompensationsrad (4) endseitig des ersten Hebelarms (61) und das zweite Kompensationsrad (5) endseitig des zweiten Hebelarms (62) drehbar aufgenommen sind, wobei zwischen den Hebelarmen (61, 62) das Lager zur schwenkbaren Befestigung der Schwinge (6) vorgesehen ist.

8. Antriebsmittel nach einem der vorhergehenden Ansprüche, **dadurch gekennzeichnet, dass** das Lager aus einem Zapfen (8) und einer Bohrung (67) in der Schwinge (6) ausgebildet wird.

9. Antriebsmittel nach einem der vorhergehenden Ansprüche, **dadurch gekennzeichnet, dass** der Zapfen (8) auf einer geometrischen Achse (68) angeordnet ist, die zwischen den Drehachsen des ersten Zugmittelrades (1) und des zweiten Zugmittelrades (2) aufgespannt ist.

10. Antriebsmittel nach einem der vorhergehenden Ansprüche, **dadurch gekennzeichnet, dass** die Schwinge mit mindestens einer weiteren Bohrung (64) ausgestattet ist, die mit dem Zapfen (8) eine alternative Position des Lagers ausbilden kann.

11. Antriebsmittel nach einem der vorhergehenden Ansprüche, **dadurch gekennzeichnet, dass** weitere mögliche Bohrungen zur schwenkbaren Aufnahme der Schwinge auf dem Zapfen auf einer Mittelachse vorgesehen sein können, die sich durch die Mittelpunkte der Bohrung (67) und der Bohrung (64) erstreckt.

12. Antriebsmittel nach einem der vorhergehenden Ansprüche, **dadurch gekennzeichnet, dass** die Schwinge (6) um einen Schwenkwinkel (8) um das Lager verschwenkt werden kann, wobei das Lager, die Schwinge (6), die Kompensationsräder (4, 5) und das Zugmittel (3) derart eingerichtet sind, dass sich beim Verschwenken der Schwinge (6) um den Schwenkwinkel (δ) eine Verdrehung der Kompensationsräder (4, 5) um einen Verdrehwinkel (λ) ergibt.

13. Kettenantrieb, umfassend mindestens
- ein Kettenrad (7)
- ein Antriebsmittel, wobei das Kettenrad (7) von dem Antriebsmittel angetrieben wird,
**dadurch gekennzeichnet, dass**
es sich bei dem Antriebsmittel um ein Antriebsmittel gemäß mindestens einem der Ansprüche 1 bis 12 handelt.

14. Kettenantrieb nach Anspruch 13, **dadurch gekennzeichnet, dass** der Kettenantrieb ein weiteres Kettenrad aufweist, wobei eine Förderkette um das Kettenrad (7) und das weitere Kettenrad gelegt ist, wobei die Förderkette mit einer Anzahl von Anbauteilen, insbesondere Fahrstufen oder Paletten ausgestattet ist.

15. Kettenantrieb nach einem der Ansprüche 13 oder 14, **dadurch gekennzeichnet, dass** der Verdrehwinkel λ der Kompensationsräder (4, 5) dem halben Teilungswinkel des Förderkettenrades (7), multipliziert mit der Zähnezahl des mit dem Förderkettenrad (7) gekoppelten Zugmittelrades (2), geteilt durch die Zähnezahl der Kompensationsräder (4, 5) entspricht.

## Claims

1. Drive means for the polygon-compensated drive of a chain wheel, comprising
- two traction drive wheels (1, 2),
- a traction drive (3) which runs via the latter and has an top span (31) and a bottom span (32) and
- a tensioning means which acts on the traction drive (3),
**wherein the tensioning means comprises**
- a first non-round compensation wheel (4) which can enter into contact with the top span (31), and
- a second non-round compensation wheel (5) which can enter into contact with the bottom span (32),
**characterized in that** the tensioning means also
comprises:
- a single rocker (6) which is configured to rotatably receive both the first compensation wheel (4) and the second compensation wheel (5), wherein the rocker (6) is pivotably mounted on a positionally-fixed bearing.

2. Drive means according to Claim 1, **characterized in that** the compensation wheels (4, 5) have a rotational axis (45) and a running surface (41, 42, 43, 44) for the traction drive (3), wherein at least a first radius (r₁₁, r₂₁) is provided between the rotational axis and the running surface and a second radius (r₁₂, r₂₂) is provided between the rotational axis (45) and the running surface (41, 42, 43, 44), wherein the first radius is unequal to the second radius.

3. Drive means according to one of the preceding claims, **characterized in that** the compensation wheels (4, 5) have at least one, preferably four running surface sections (41, 42, 43, 44), wherein at least a first radius (r₁₁, r₂₁) is provided between the rotational axis and the running surface section, and a second radius (r₁₂, r₂₂) is provided between the rotational axis (45) and the running surface section (41, 42, 43, 44), wherein the first radius is unequal to the second radius.

4. Drive means according to one of the preceding claims, **characterized in that** the running surface sections (41, 42, 43, 44) are of convex design.

5. Drive means according to one of the preceding claims, **characterized in that** the compensation wheels are toothed wheels, wherein the running surface or the running surface section for the traction means correspond to the pitch circle of the toothed wheel.

6. Drive means according to one of the preceding claims, **characterized in that** the first compensation wheel (4) and the second compensation wheel (5) are formed identically.

7. Drive means according to one of the preceding claims, **characterized in that** the rocker (6) has a first lever arm (61) and a second lever arm (62), wherein the first compensation wheel (4) is rotatably held at the end side of the first lever arm (61), and the second compensation wheel (5) is rotatably held at the end side of the second lever arm (62), wherein the bearing for pivotably attaching the rocker (6) is provided between the lever arms (61, 62).

8. Drive means according to one of the preceding claims, **characterized in that** the bearing is formed from a pin (8) and a bore (67) in the rocker (6).

9. Drive means according to one of the preceding claims, **characterized in that** the pin (8) is arranged on a geometric axis (68) which is extended between the rotational axes of the first traction drive wheel (1) and the second traction drive wheel (2).

10. Drive means according to one of the preceding claims, **characterized in that** the rocker is equipped with at least one further bore (64) which, with the pin (8) can form an alternative position of the bearing.

11. Drive means according to one of the preceding claims, **characterized in that** further possible bores for pivotably holding the rocker can be provided on the pin on a central axis which extends through the centre points of the bore (67) and the bore (64).

12. Drive means according to one of the preceding claims, **characterized in that** the rocker (6) can be pivoted about a pivoting angle (δ) about the bearing, wherein the bearing, the rocker (6), the compensation wheels (4, 5) and the traction drive (3) are configured in such a way that during the pivoting of the rocker (6) about the pivoting angle (δ) the compensation wheels (4, 5) rotate about a rotational angle (λ).

13. Chain drive, comprising at least
- one chain wheel (7), and
- a drive means, wherein the chain wheel (7) is driven by the drive means,
**characterized in that**
the drive means is a drive means according to at least one of Claims 1 to 12.

14. Chain drive according to Claim 13, **characterized in that** the chain drive has a further chain wheel, wherein a conveyor chain is laid around the chain wheel (7) and the further chain wheel, wherein the conveyor chain is equipped with a number of attachment parts, in particular escalator steps or pallets.

15. Chain drive according to one of Claims 13 or 14, **characterized in that** the rotational angle λ of the compensation wheels (4, 5) corresponds to half the pitch angle of the conveyor chain wheel (7), multiplied by the number of teeth of the traction drive wheel (2) which is coupled to the conveyor chain wheel (7), divided by the number of teeth of the compensation wheels (4, 5).

## Revendications

1. Moyen d'entraînement pour l'entraînement à compensation de polygonale d'une roue de chaîne, comprenant :
- deux roues de moyen de traction (1, 2),
- un moyen de traction (3) tournant sur celles-ci, avec un brin supérieur (31) et un brin inférieur (32) et
- un moyen de serrage agissant sur le moyen de traction (3),
le moyen de serrage comprenant :
- une première roue de compensation non circulaire (4), qui peut venir en contact avec le brin supérieur (31),
- une deuxième roue de compensation non circulaire (5), qui peut venir en contact avec le brin inférieur (32),
**caractérisé en ce que** le moyen de serrage comprend en outre :
- une biellette unique (6), qui est prévue pour recevoir de manière rotative à la fois la première roue de compensation (4) et la deuxième roue de compensation (5),
- la biellette (6) étant supportée de manière pivotante sur un palier fixe.

2. Moyen d'entraînement selon la revendication 1, **caractérisé en ce que** les roues de compensation (4, 5) présentent un axe de rotation (45) et une surface de roulement (41, 42, 43, 44) pour le moyen de traction (3), au moins un premier rayon (r₁₁, r₂₁) étant prévu entre l'axe de rotation et la surface de roulement et un deuxième rayon (r₁₂, r₂₂) étant prévu entre l'axe de rotation (45) et la surface de roulement (41, 42, 43, 44), le premier rayon n'étant pas égal au deuxième rayon.

3. Moyen d'entraînement selon l'une quelconque des revendications précédentes, **caractérisé en ce que** les roues de compensation (4, 5) présentent au moins une, de préférence quatre, portions de surface de roulement (41, 42, 43, 44), au moins un premier rayon (r₁₁, r₂₁) étant prévu entre l'axe de rotation et la portion de surface de roulement et un deuxième rayon (r₁₂, r₂₂) étant prévu entre l'axe de rotation (45) et la portion de surface de roulement (41, 42, 43, 44), le premier rayon n'étant pas égal au deuxième rayon.

4. Moyen d'entraînement selon l'une quelconque des revendications précédentes, **caractérisé en ce que** les portions de surface de roulement (41, 42, 43, 44) sont réalisées sous forme convexe.

5. Moyen d'entraînement selon l'une quelconque des revendications précédentes, **caractérisé en ce que** les roues de compensation sont des roues de chaînes, la surface de roulement ou la portion de surface de roulement pour le moyen de traction correspondant au cercle partiel de la roue de chaîne.

6. Moyen d'entraînement selon l'une quelconque des revendications précédentes, **caractérisé en ce que** la première roue de compensation (4) et la deuxième roue de compensation (5) sont configurées de manière identique.

7. Moyen d'entraînement selon l'une quelconque des revendications précédentes, **caractérisé en ce que** la biellette (6) présente un premier bras de levier (61) et un deuxième bras de levier (62), la première roue de compensation (4) étant reçue à rotation du côté de l'extrémité du premier bras de levier (61) et la deuxième roue de compensation (5) étant reçue à rotation du côté de l'extrémité du deuxième bras de levier (62), le palier étant prévu entre les bras de levier (61, 62) pour la fixation pivotante de la biellette (6).

8. Moyen d'entraînement selon l'une quelconque des revendications précédentes, **caractérisé en ce que** le palier est réalisé à partir d'un tourillon (8) et d'un alésage (67) dans la biellette (6).

9. Moyen d'entraînement selon l'une quelconque des revendications précédentes, **caractérisé en ce que** le tourillon (8) est disposé sur un axe géométrique (68) qui est tendu entre les axes de rotation de la première roue de moyen de traction (1) et de la deuxième roue de moyen de traction (2).

10. Moyen d'entraînement selon l'une quelconque des revendications précédentes, **caractérisé en ce que** la biellette est munie d'au moins un alésage supplémentaire (64) qui peut former avec le tourillon (8) une position alternative du palier.

11. Moyen d'entraînement selon l'une quelconque des revendications précédentes, **caractérisé en ce que** d'autres alésages possibles pour recevoir de manière pivotante la biellette sur le tourillon peuvent être prévus sur un axe médian qui s'étend à travers les centres de l'alésage (67) et de l'alésage (64).

12. Moyen d'entraînement selon l'une quelconque des revendications précédentes, **caractérisé en ce que** la biellette (6) peut être pivotée autour du palier suivant un angle de pivotement (δ), le palier, la biellette (6), les roues de compensation (4, 5) et le moyen de traction (3) étant prévus de telle sorte que lors du pivotement de la biellette (6) suivant l'angle de pivotement (δ), il se produise une rotation des roues de compensation (4, 5) suivant un angle de rotation (λ).

13. Entraînement à chaîne, comprenant au moins
- une roue de chaîne (7),
- un moyen d'entraînement, la roue de chaîne (7) étant entraînée par le moyen d'entraînement,
**caractérisé en ce que**
le moyen d'entraînement est un moyen d'entraînement selon au moins l'une quelconque des revendications 1 à 12.

14. Entraînement à chaîne selon la revendication 13, **caractérisé en ce que** l'entraînement à chaîne présente une roue de chaîne supplémentaire, une chaîne de transport étant placée autour de la roue de chaîne (7) et de la roue de chaîne supplémentaire, la chaîne de transport étant munie d'une pluralité de composants rapportés, en particulier de rapports de marche ou de palettes.

15. Entraînement à chaîne selon l'une quelconque des revendications 13 ou 14, **caractérisé en ce que** l'angle de rotation λ des roues de compensation (4, 5) correspond à la moitié du pas angulaire de la roue de chaîne de transport (7), multiplié par le nombre des dents de la roue de moyen de traction (2) accouplée à la roue de chaîne de transport (7), divisé par le nombre de dents des roues de compensation (4, 5).
